# EUROPÄISCHE PATENTSCHRIFT

(11) **EP 3 368 584 B1**
(45) Veröffentlichungstag und Bekanntmachung des Hinweises auf die Patenterteilung: **01.07.2020**
(21) Anmeldenummer: 16785519.6
(22) Anmeldetag: 26.10.2016
(51) Int. Cl.: C08G 18/48, C08G 18/76, C08G 18/18, C08G 18/20, C08G 18/40, C08G 18/42, C08G 101/00

(54) **POLYETHERESTER UND IHRE VERWENDUNG ZUR HERSTELLUNG VON POLYURETHAN-HARTSCHAUMSTOFFEN**
POLYETHER ESTER AND USE OF SAME FOR PRODUCING POLYURETHANE SOLID FOAM MATERIALS
POLYÉTHER-ESTER ET SON UTILISATION POUR LA FABRICATION DE MOUSSES RIGIDES DE POLYURÉTHANE

(30) Priorität: 28.10.2015 EP 15191987
(43) Veröffentlichungstag der Anmeldung: 05.09.2018
(73) Patentinhaber: BASF SE, 67056 Ludwigshafen am Rhein (DE)
(72) Erfinder: KOCH, Sebastian, 49448 Lemförde (DE); GATTI, Michele, 5070 Frick (CH); ELBING, Mark, 23627 Gross Groenau (DE); KÖNIG, Christian, 68165 Mannheim (DE); KLASSEN, Johann, 32351 Stemwede-Oppendorf (DE)
(86) Internationale Anmeldenummer: PCT/EP2016/075749
(87) Internationale Veröffentlichungsnummer: WO 2017/072152

(56) Entgegenhaltungen:
- EP-A1- 2 039 711
- WO-A1-2014/048777

## Beschreibung

Die Erfindung betrifft eine Polyolkomponente, ein Verfahren zur Herstellung von Polyurethan Hartschaumstoffen unter Verwendung der Polyolkomponente sowie die Polyurethan-Hartschaumstoffe selbst.

Polyurethan(PU)-Hartschaumstoffe können in bekannter Weise durch Umsetzung von organischen Polyisocyanaten mit einer oder mehreren Verbindungen mit mindestens zwei reaktiven Wasserstoffatomen, vorzugsweise Polyether- und/oder Polyesteralkohole (Polyole), in Gegenwart von Treibmitteln, Katalysatoren und gegebenenfalls Hilfsmitteln und/oder Zusatzstoffen hergestellt werden.

Üblicherweise werden zur Herstellung von PU-Hartschaumstoffen auf Isocyanatbasis Polyole mit hohen Funktionalitäten und niedrigem Molekulargewicht verwendet, um eine optimale Vernetzung der Schäume zu gewährleisten. Die vorzugsweise eingesetzten Polyetheralkohole haben zumeist eine Funktionalität von 4 bis 8 und eine Hydroxylzahl im Bereich zwischen 300 bis 600, insbesondere zwischen 400 und 500 mg KOH/g. Es ist bekannt, dass Polyole mit sehr hoher Funktionalität und Hydroxylzahlen im Bereich zwischen 300 und 600 eine sehr hohe Viskosität aufweisen. Weiterhin ist bekannt, dass derartige Polyole vergleichsweise polar sind und somit ein schlechtes Lösungsvermögen für übliche Treibmittel, insbesondere Kohlenwasserstoffe wie Pentane, insbesondere Cyclopentan aufweisen. Um diesen Mangel zu beheben, werden der Polyolkomponente häufig Polyetheralkohole mit Funktionalitäten von 2 bis 4 und Hydroxylzahlen von 100 bis 250 mg KOH/g zugesetzt.

Außerdem ist bekannt, dass bei Verwendung von Polyolkomponenten auf Basis hochfunktioneller, polarer Polyole die Fließfähigkeit (ausgedrückt durch den Fließfaktor FF = Mindestfülldichte/Freigeschäumte Dichte der Reaktionsmischung aus Isocyanat und Polyol) nicht immer zufriedenstellend ist. Aus EP-A 1 138 709 ist aber bekannt, dass Reaktionsmischungen aus Isocyanat und Polyol mit einer guten Fließfähigkeit hergestellt werden können, wenn die Polyolkomponente mindestens einen Polyetheralkohol mit einer Hydroxylzahl von 100 bis 250 mg KOH/g enthält, der durch Anlagerung von Alkylenoxiden an H-funktionelle Startsubstanzen mit 2 bis 4 aktiven Wasserstoffatomen, insbesondere Glykole, Trimethylolpropan, Glycerin, Pentaerythrit oder vic-Toluylendiamin (vic-TDA), hergestellt wurde.

Aus WO 2013/127647 A1 sind Polyetheresterpolyole bekannt, die durch die gleichzeitige Umsetzung von OH-funktionellen Startsubstanzen, Fettsäuren oder Fettsäureestern und Alkylenoxiden erhalten werden. Diese hochfunktionellen Polyetheresterpolyole besitzen eine sehr gute Treibmittelverträglichkeit und niedrige Viskosität. Daher können solche Polyetheresterpolyole in größeren Mengen als üblich für entsprechende Polyole in diesem Hydroxylzahl- und Funktionalitätsbereich in Formulierungen eingesetzt werden. In der WO 2013/127647 A1 werden auch Polyolkomponenten bzw. Formulierungen beschrieben, die Mischungen solcher Polyetheresterpolyole mit Polyetherpolyolen, bevorzugt solchen basierend auf propoxyliertem Toluylendiamin enthalten, die ohne einen Polyetheralkohol mit Funktionalitäten von 2 bis 4 und Hydroxylzahlen von 100 bis 250 mg KOH/g gemäß EP-A 1 138 709 auskommen und trotzdem noch ein ausreichendes Lösungsvermögen für Treibmittel auf Kohlenwasserstoffbasis wie Pentane, insbesondere Cyclopentan, besitzen und als Reaktionsgemisch mit dem Polyisocyanat eine ausreichende Fließfähigkeit aufweisen.

Die nach dem zuvor beschriebenen Stand der Technik erhältlichen PU-Hartschaumstoffe können jedoch noch nicht allen Anforderungen gerecht werden. Besonders die in WO 2013/127647 A1 beschriebenen Polyolkomponenten bzw. Formulierungen, die ohne ein zusätzliches Polyetheralkohol mit einer Funktionalität von 2 bis 4 und Hydroxylzahlen von 100 bis 250 mg KOH/g gemäß EP-A 1 138 709 auskommen, besitzen nicht die mechanischen Eigenschaften, insbesondere Druckfestigkeit, die für Dämm- und Kühlanwendungen benötigt werden. Darüber hinaus ist auch die Entformung des Schaumstoffs noch verbesserungsbedürftig.

In der EP 2 039 711 A1 werden lagerungsstabile Polyolkomponenten offenbart, die mindestens 25 Gew.-% eines Polyetheresterpolyols auf Basis eines natürlichen Öls und n-Pentan enthalten. Der Fettsäurestergehalt des Polyetheresterpolyols beträgt bevorzugt 20 bis 60 Gew.-%. Die Polyolkomponente kann auch weitere nicht näher spezifizierte Polyether-, Polyester-, Polycarbonatolyole etc. enthalten. Explizit beschrieben wird eine Polyolkomponente, die 41,2 Gew.-% eines Polyetheresterpolyols (Funktionalität 3,5), 16,47 Gew.-% eines TDA gestarteten Polyols und 24,72 Gew.-% eines Sucrose gestarteten Polyols (OH-Zahl 340) enthält. Die Druckfestigkeit und oftmals auch die Entformung von daraus erhaltenen PU-Hartschaumstoffen sind noch verbesserungsbedürftig.

Es besteht daher die Aufgabe, eine Polyolkomponente zur Herstellung von Polyurethan-Hartschaumstoffen bereitzustellen, die ohne einen üblicherweise eingesetzten Polyetheralkohol mit einer Funktionalität von 2 bis 4 und Hydroxylzahlen von 100 bis 250 mg KOH/g gemäß EP 1 138 709 auskommt, die eine hohe Löslichkeit für übliche physikalische Treibmittel, insbesondere Kohlenwasserstoffe wie Pentane und Cyclopentan, besitzt, sowie als Reaktionsgemisch mit einem Di- oder Polyisocyanat gute Verarbeitungseigenschaften aufweist. Das Polyolkomponenten/Di- oder Polyisocyanat-Reaktionsgemisch soll eine gute Fließfähigkeit besitzen, ein schnelles Entformen des Schaumstoffs ermöglichen und der erhaltene Polyurethan-Hartschaumstoff verbesserte mechanische Eigenschaften, insbesondere eine verbesserte Druckfestigkeit, aufweisen.

Überraschenderweise kann diese Aufgabe durch die erfindungsgemäße Polyolkomponente gelöst werden.

Ein Gegenstand der Erfindung ist eine Polyolkomponente b) enthaltend (oder bestehend aus):
25 bis 35 Gew.-% eines oder mehrerer Polyetheresterpolyole B) mit einer (mittleren) Funktionalität von 3,8 bis 4,8, vorzugsweise 4,0 bis 4,7, einer OH-Zahl von 380 bis 440, vorzugsweise 390 bis 430, besonders bevorzugt 410 bis 430 mg KOH/g, und einem Fettsäure- und/oder Fettsäureestergehalt, bevorzugt Fettsäuremethylestergehalt, besonders bevorzugt Biodiesel- und/oder Ölsäuremethylestergehalt, von 8 bis 17 Gew.-%, bevorzugt 10 bis 16 Gew.-%, besonders bevorzugt 11 bis 15 Gew.-%, bezogen auf das Gewicht der Polyetheresterpolyole B);
25 bis 35 Gew.-% eines oder mehrerer Polyetherpolyole C) mit einer (mittleren) Funktionalität von 3,7 bis 4; vorzugsweise 3,9 bis 4; und einer OH-Zahl von 300 bis 420, vorzugsweise 350 bis 410 mg KOH/g;
25 bis 35 Gew.-% eines oder mehrerer Polyetherpolyole D) mit einer (mittleren) Funktionalität von 4,5 bis 6,5; bevorzugt 4,8 bis 6,2; besonders bevorzugt 5 bis 6,1; und einer OH-Zahl von 400 bis 520, vorzugsweise 400 bis 480, besonders bevorzugt 400 bis 460 mg KOH/g;
1,0 bis 5 Gew.-% eines oder mehrerer Katalysatoren E),
0,1 bis 5 Gew.-% weiterer Hilfsmittel und/oder Zusatzstoffe F),
0,5 bis 5 Gew.-% Wasser G),
wobei die Summe der Komponenten B), C), D), E), F) und G) 100 Gew.-% ergibt.

### Polyetheresterpolyole B)

Geeignete Polyetheresterpolyole B) enthalten das (bestehen aus dem) Umsetzungsprodukt von
i) 20 bis 35 Gew.-% mindestens eines hydroxylgruppenhaltigen Startermoleküls;
ii) 8 bis 17 Gew.-%, bevorzugt 10 bis 16 Gew.-%, besonders bevorzugt 11 bis 15 Gew.-% einer oder mehrerer Fettsäuren, Fettsäuremonoester oder Gemische daraus,
iii) 50 bis 65 Gew.-%, eines oder mehrerer Alkylenoxide mit 2 bis 4 C-Atomen.

Die Startermoleküle der Komponente i) werden im Allgemeinen so ausgewählt, dass die (mittlere) Funktionalität der Komponente i) 3,8 bis 4,8, bevorzugt 4,0 bis 4,7, besonders bevorzugt 4,2 bis 4,6 beträgt. Gegebenenfalls wird ein Gemisch von geeigneten Startermolekülen eingesetzt.

Bevorzugte hydroxylgruppenhaltige Startermoleküle der Komponente i) sind ausgewählt aus der Gruppe bestehend aus: Zuckern und Zuckeralkoholen (Glucose, Mannit, Saccharose, Pentaerythrit, Sorbit), mehrwertigen Phenolen, Resolen, wie z.B. oligomeren Kondensationsprodukten aus Phenol und Formaldehyd, Trimethylolpropan, Glycerin, Glykolen wie Ethylenglykol, Propylenglykol und deren Kondensationsprodukte wie Polyethylenglykole und Polypropylenglykole z.B. Diethylenglykol, Triethylenglykol, Dipropylenglykol, und Wasser.

Besonders bevorzugt als Komponente i) sind Zucker und Zuckeralkohole wie Saccharose und Sorbit, Glycerin, sowie Gemische der vorgenannten Zucker und/oder Zuckeralkohole mit Glycerin, Wasser und/oder Glykolen wie z.B. Diethylenglykol und/oder Dipropylenglykol. Ganz besonders bevorzugt sind Gemische aus Saccharose und mindestens einer - vorzugsweise einer - Verbindung ausgewählt aus: Glycerin, Diethylenglykol und Dipropylenglykol. Ganz besonders bevorzugt ist ein Gemisch aus Saccharose und Glycerin.

Der Anteil Startermoleküle i) an den erfindungsgemäß eingesetzten Polyetheresterpolyolen B) beträgt im Allgemeinen 20 bis 35 Gew.-%, bevorzugt 22 bis 32 Gew.-%, besonders bevorzugt 24 bis 30 Gew.-%, ganz besonders bevorzugt 24 bis 29 Gew.-%, bezogen auf das Gewicht der Polyetheresterpolyole B).

Im Allgemeinen ist die Fettsäure oder der Fettsäuremonoester ii) ausgewählt aus der Gruppe bestehend aus Polyhydroxyfettsäuren, Ricinolsäure, Hydroxyl-modifizierten Ölen, Hydroxyl-modifizierten Fettsäuren und Fettsäureestern basierend auf Miyristoleinsäure, Palmitoleinsäure, Ölsäure, Stearinsäure, Palmitinsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure. Bevorzugte Fettsäuremonoester sind die Fettsäuremethylester. Bevorzugte Fettsäuren sind Stearinsäure, Palmitinsäure, Linolensäure und insbesondere Ölsäure, deren Monoester, vorzugsweise deren Methylester, sowie Gemische daraus. Die Fettsäuren werden bevorzugt als reine Fettsäuren eingesetzt. Ganz besonders bevorzugt werden Fettsäuremethylester wie z.B. Biodiesel oder Ölsäuremethylester eingesetzt.

Unter Biodiesel sind Fettsäuremethylester angelehnt an die Norm EN 14214 aus dem Jahr 2010 zu verstehen. Hauptbestandteile des im Allgemeinen aus Rapsöl, Sojaöl oder Palmöl gewonnen Biodiesels sind Methylester von gesättigten C₁₆ bis C₁₈-Fettsäuren und Methylester von einfach oder mehrfach ungesättigten C₁₈-Fettsäuren wie Ölsäure, Linolsäure und Linolensäure.

Der Fettsäure- und Fettsäuremonoesteranteil der erfindungsgemäß eingesetzten Polyetheresterpolyole B) beträgt im Allgemeinen 8 bis 17 Gew.-%, bevorzugt 10 bis 16 Gew.-%, besonders bevorzugt 11 bis 15 Gew.-%, bezogen auf das Gewicht der Polyetheresterpolyole B).

Geeignete Alkylenoxide iii) mit 2 bis 4 C-Atomen sind beispielsweise Ethylenoxid, Tetrahydrofuran, Propylenoxid, 1,2- bzw. 2,3-Butylenoxid und/oder Styroloxid. Die Alkylenoxide können einzeln, alternierend nacheinander oder als Mischungen verwendet werden.
Bevorzugte Alkylenoxide sind Propylenoxid und Ethylenoxid, besonders bevorzugt sind Gemische aus Ethylenoxid und Propylenoxid mit > 50 Gew.-% Propylenoxid, ganz besonders bevorzugt ist reines Propylenoxid.

In einer bevorzugten Ausführungsform wird als Alkoxylierungskatalysator ein Amin verwendet, bevorzugt Dimethylethanolamin oder Imidazol, besonders bevorzugt ist Imidazol.

Der Anteil an Alkylenoxiden an den erfindungsgemäß eingesetzten Polyetheresterpolyolen B) beträgt im Allgemeinen 50 bis 65 Gew.-%, bevorzugt 52 bis 62 Gew.-%, besonders bevorzugt 55 bis 61 Gew.-%, ganz besonders bevorzugt 57 bis 60 Gew.-%, bezogen auf das Gewicht der Polyetheresterpolyole B).

Die erfindungsgemäß eingesetzten Polyetheresterpolyole B) weisen eine Hydroxyl-Zahl (OH-Zahl) von 380 bis 440 mg KOH/g, vorzugsweise 390 bis 430 mg KOH/g, besonders bevorzugt 410 bis 430 mg KOH/g auf.

Im Allgemeinen weisen die erfindungsgemäßen Polyetheresterpolyole eine (mittlere) Funktionalität von 3,8 bis 4,8, vorzugsweise von 4,0 bis 4,7 auf.

Im Allgemeinen beträgt der Anteil der Polyetheresterpolyole B) 25 bis 35 Gew.-%, bevorzugt 27 bis 32 Gew.-%, bezogen auf die Summe der Komponenten B) bis G).

### Polyetherpolyole C)

Erfindungsgemäß verwendete Polyetherpolyole C) können nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliummethylat oder Kaliumisopropylat, als Katalysatoren und unter Zusatz mindestens eines aminhaltigen Startermoleküls, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Die Startermoleküle werden im Allgemeinen so ausgewählt, dass deren (mittlere) Funktionalität 3,7 bis 4, bevorzugt 3,8 bis 4, besonders bevorzugt 4 beträgt. Gegebenenfalls wird ein Gemisch von geeigneten Startermolekülen eingesetzt.

Als Startermoleküle für die Polyetherpolyole C) kommen beispielsweise in Betracht: aliphatische und aromatische Diamine-wie Ethylendiamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 3,4-, 2,4-, 2,5- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Besonders bevorzugt sind die oben genannten primären Diamine, insbesondere vicinales TDA (vic-TDA) wie z.B. 2,3- und/oder 3,4-Toluylendiamin.

Geeignete Alkylenoxide mit 2 bis 4 C-Atomen sind beispielsweise Ethylenoxid, Tetrahydrofuran, Propylenoxid, 1,2- bzw. 2,3-Butylenoxid und/oder Styroloxid. Die Alkylenoxide können einzeln, alternierend nacheinander oder als Mischungen verwendet werden.
Bevorzugte Alkylenoxide sind Propylenoxid und/oder Ethylenoxid, besonders bevorzugt sind Gemische aus Ethylenoxid und Propylenoxid mit > 50 Gew.-% Propylenoxid, ganz besonders bevorzugt ist reines Propylenoxid.

Die Polyetherpolyole C), vorzugsweise Polyoxypropylenpolyole und/oder Polyoxyethylenpolyole, besitzen eine Funktionalität von vorzugsweise 3,7 bis 4 und insbesondere 3,9 bis 4.

In einer besonders bevorzugten Ausführungsform der Erfindung wird ein propoxyliertes Toluylendiamin, insbesondere vic-Toluylendiamin als Polyetherpolyol C) verwendet.

Im Allgemeinen beträgt der Anteil der Polyetherpolyole C) 25 bis 35 Gew.-%, bevorzugt 27 bis 32 Gew.-%, bezogen auf die Summe der Komponenten B) bis G).

### Polyetherpolyole D)

Die Herstellung der erfindungsgemäß verwendeten Polyetherpolyole D) erfolgt ebenfalls nach bekannten Verfahren wie vorstehend für die Polyetherpolyole C) beschrieben, allerdings erfolgt die anionische oder kationische Polymerisation unter Zusatz mindestens eines hydroxylgruppenhaltigen Startermoleküls, das 2 bis 8, vorzugsweise 4 bis 8, besonders bevorzugt 6 bis 8, reaktive Wasserstoffatome gebunden enthält.

Gegebenenfalls wird ein Gemisch von geeigneten hydroxylgruppenhaltigen Startermolekülen eingesetzt.

Die hydroxylgruppenhaltigen Startermoleküle für die Polyetherpolyole D) sind vorzugsweise ausgewählt aus der Gruppe bestehend aus: Zuckern und Zuckeralkoholen (Glucose, Mannit, Saccharose, Pentaerythrit, Sorbit), mehrwertigen Phenolen, Resolen, wie z.B. oligomeren Kondensationsprodukten aus Phenol und Formaldehyd, Trimethylolpropan, Glycerin, Glykolen wie Ethylenglykol, Propylenglykol und deren Kondensationsprodukte wie Polyethylenglykole und Polypropylenglykole z.B. Diethylenglykol, Triethylenglykol, Dipropylenglykol, und Wasser.

Besonders bevorzugte Startermoleküle für die Polyetherpolyole D) sind Zucker und Zuckeralkohole wie Saccharose und Sorbit, Glycerin, sowie Gemische der vorgenannten Zucker und/oder Zuckeralkohole mit Glycerin, Wasser und/oder Glykolen wie z.B. Diethylenglykol und/oder Dipropylenglykol. Ganz besonders bevorzugt sind Gemische aus Saccharose und mindestens einer - vorzugsweise einer - Verbindung ausgewählt aus: Glycerin, Diethylenglykol und Dipropylenglykol. Ganz besonders bevorzugt ist ein Gemisch aus Glycerin und Saccharose.

Geeignete Alkylenoxide mit 2 bis 4 C-Atomen sind beispielsweise Ethylenoxid, Tetrahydrofuran, Propylenoxid, 1,2- bzw. 2,3-Butylenoxid und/oder Styroloxid. Die Alkylenoxide können einzeln, alternierend nacheinander oder als Mischungen verwendet werden.
Bevorzugte Alkylenoxide sind Propylenoxid und/oder Ethylenoxid, besonders bevorzugt sind Gemische aus Ethylenoxid und Propylenoxid mit > 50 Gew.-% Propylenoxid, ganz besonders bevorzugt ist reines Propylenoxid.

Die Polyetherpolyole D), vorzugsweise Polyoxypropylenpolyole und/oder Polyoxyethylenpolyole, besitzen eine Funktionalität von vorzugsweise 4,8 bis 6,2, und insbesondere 5 bis 6,1.

In einer besonders bevorzugten Ausführungsform der Erfindung wird ein propoxyliertes Saccharose /Glycerin-Gemisch als Polyetherpolyol D) verwendet.

Im Allgemeinen beträgt der Anteil der Polyetherpolyole D) 25 bis 35 Gew.-%, bevorzugt 27 bis 32 Gew.-%, bezogen auf die Summe der Komponenten B) bis G).

### Katalysator E)

Als Katalysatoren E) werden insbesondere Verbindungen verwendet, die die Reaktion der in der Polyolkomponente b) enthaltenen Polyetheresterpolyole B) und der Polyetherpolyole C) und D) mit den organischen, gegebenenfalls modifizierten Di- und/oder Polyisocyanaten A) gemäß dem nachstehenden erfindungsgemäßen Verfahren stark beschleunigen.

Zweckmäßigerweise verwendet als Katalysatoren E) werden basische Polyurethankatalysatoren, beispielsweise tertiäre Amine, wie Triethylamin, Tributylamin, Dimethylbenzylamin, Dicyclohexylmethylamin, Dimethylcyclohexylamin, Bis(2-dimethylaminoethyl) ether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo(2,2,2)octan(Dabco), 1,8-Diaza-bicyclo(5.4.0)-undecen-7, und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von Säuren, insbesondere langkettigen Fettsäuren mit 10 bis 20 C-Atomen und gegebenenfalls seitenständigen OH-Gruppen.

Bevorzugt wird eine Mischung aus mehreren der vorgenannten Katalysatoren E) eingesetzt. Besonders bevorzugt eingesetzt wird eine Katalysatormischung E) bestehend aus: Dimethylcyclohexylamin E1), Pentamethyldiethylentriamin E2), Tris(dimethylaminopropyl)hexahydro-1,3,5-triazin E3) und Dimethylbenzylamin E4).

Bevorzugt beträgt in der vorgenannten Katalysatormischung aus den Katalysatoren E1) bis E4) der Anteil des Katalysators E1) 20 bis 60 Gew.-%, der Anteil des Katalysators E2) 10 bis 50 Gew.- %, der Anteil des Katalysators E3) 10 bis 40 Gew.-% und der Anteil des Katalysators E4) 20 bis 50 Gew.-%, wobei die Summe der Katalysatoren E1) bis E4) 100 Gew.-% ergibt.

Verwendet werden, 1,0 bis 5,0 Gew.-% eines oder mehrerer Katalysatoren E), bezogen auf das Gewicht der Komponenten B) bis G).

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten Katalysatoren können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

### Hilfsmittel und/oder Zusatzstoffe F)

Als weitere Hilfsmittel und/oder Zusatzstoffe F) der Polyolkomponente b) seien beispielsweise oberflächenaktive Substanzen wie Emulgatoren, Schaumstabilisatoren und Zellregler, bevorzugt Schaumstabilisatoren, genannt.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane.

Bevorzugt enthält die Polyolkomponente b) als weiteres Hilfsmittel oder als Zusatzstoff F) Schaumstabilisatoren, insbesondere silikonhaltige Schaumstabilisatoren wie Siloxanoxalkylen-Mischpolymerisate und andere Organopolysiloxane.

Die vorgenannten Schaumstabilisatoren werden vorzugsweise in Mengen von 0,5 bis 4 Gew.-%, besonders bevorzugt 1 bis 3 Gew.-% eingesetzt, bezogen auf das Gewicht der Komponenten B) bis G) eingesetzt werden.

Nähere Angaben über die vorgenannten und weitere geeignete Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

### Treibmittel

Die erfindungsgemäße Polyolkomponente b) enthält bevorzugt 1 bis 3 Gew.-%, besonders bevorzugt 1,5 bis 3,0 Gew.-%, ganz besonders bevorzugt 2,0 bis 3,0 Gew.-%, Wasser G), bezogen auf die gesamte Polyolkomponente b). Das Wasser G) fungiert in der Reaktionsmischung mit den Di- oder Polyisocycanaten A) als chemisches Treibmittel.

Als Treibmittel zur Herstellung der erfindungsgemäßen Polyurethan-Hartschaumstoffe wird Wasser G) als chemisches Treibmittel in Kombination mit einem physikalischen Treibmittel H) eingesetzt. Das physikalische Treibmittel H) kann der fertigen erfindungsgemäßen Polyolkomponente b) vorzugsweise direkt vor dem Verschäumen der Polyolkomponente zugesetzt werden. Die Zugabe kann dosiert über einen Statikmischer erfolgen.

Die eingesetzte Menge des physikalischen Treibmittels H), bzw. der Treibmittelmischung H) beträgt 10 bis 20 Gew.-Teile, bevorzugt 10 bis 17 Gew.-Teile, bezogen auf 100 Gew.-Teile der Polyolkomponente b).

Geeignete physikalische Treibmittel H) sind niedrig siedende Flüssigkeiten, welche gegenüber den organischen, gegebenenfalls modifizierten Di- oder Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter niedrig siedender Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat. Auch Gemische dieser niedrigsiedenden Flüssigkeiten untereinander und/oder mit anderen substituierten oder unsubstituierten Kohlenwasserstoffen können verwendet werden.

Vorzugsweise werden keine halogenierten Kohlenwasserstoffe als Treibmittel H) verwendet.

Bevorzugte Verwendung als physikalisches Treibmittel H) finden Pentanisomere und/oder Cyclopentan, insbesondere Cyclopentan.
Die Kombination von Wasser G) als chemischem Treibmittel mit Cyclopentan als physiklaischem Treibmittel H) ist besonders bevorzugt.

Die erfindungsgemäße Polyolkomponente b) enthält (oder besteht aus):
25 bis 35 Gew.-% der Polyetheresterpolyole B),
25 bis 35 Gew.-% der Polyetherpolyole C),
25 bis 35 Gew.-% der Polyetherpolyole D),
1,0 bis 5 Gew.-% Katalysatoren E),
0,1 bis 5 Gew.-% Hilfsmittel und/oder Zusatzstoffe F), sowie
0,5 bis 5 Gew.-% Wasser G),
wobei die Summe der Komponenten B) bis G) 100 Gew.-% ergibt.

Bevorzugt enthält (oder besteht) die erfindungsgemäße Polyolkomponente b) (aus):
25 bis 35 Gew.-% der Polyetheresterpolyole B),
25 bis 35 Gew.-% der Polyetherpolyole C),
25 bis 35 Gew.-% der Polyetherpolyole D),
1,0 bis 5 Gew.-% Katalysatoren E),
0,5 bis 4 Gew.-% Hilfsmittel und/oder Zusatzstoffe F), sowie
1,0 bis 3 Gew.-% Wasser G),
wobei die Summe der Komponenten B) bis G) 100 Gew.-% ergibt.

Besonders bevorzugt enthält (oder besteht) die erfindungsgemäße Polyolkomponente b) (aus):
27 bis 32 Gew.-% der Polyetheresterpolyole B),
27 bis 32 Gew.-% der Polyetherpoylole C),
27 bis 32 Gew.-% der Polyetherpolyole D),
1 bis 3 Gew.-% Katalysatoren E),
1 bis 3 Gew.-% Hilfsmittel und/oder Zusatzstoffe F), sowie
1,5 bis 3 Gew.-%, vorzugsweise 2,0 bis 3,0 Gew.-%, Wasser G),
wobei die Summe der Komponenten B) bis G) 100 Gew.-% ergibt.

Gemäß einer bevorzugten Ausführungsfom wird als Polyetherpolyol C) ein C₂-C₄- alkoxyliertes, vorzugsweise propoxyliertes, Toluylendiamin und als Polyetherpolyol D) ein C₂-C₄-alkoxyliertes, vorzugsweise propoxyliertes, Saccharose/Glycerin-Gemisch eingesetzt. Gemäß einer weiteren bevorzugten Ausführungsfom wird als Polyetheresterpolyol B) das Umsetzungsprodukt von einem Saccharose/Glycerin-Gemisch mit Biodiesel oder Ölsäuremethylester und einem oder mehreren Alkylenoxiden mit 2 bis 4 C-Atomen, vorzugsweise Propylenoxid, eingesetzt.

Erfindungsgemäß sind die verschiedenen Ausführungsformen miteinander kombinierbar.

Ein weiterer Gegenstand der Erfindung ist ein Verfahren zur Herstellung von Polyurethan-Hartschaumstoffen durch Umsetzung von
I) organischen oder modifizierten organischen Di- oder Polyisocyanaten A) oder Gemischen daraus, mit
II) der erfindungsgemäßen Polyolkomponente b), der zuvor ein Treibmittel H) zugesetzt wurde.

### Di- oder Polyisocyanate A)

Als organische Di- oder Polyisocyanate A) kommen die an sich bekannten aliphatischen, cycloaliphatischen, araliphatischen und vorzugsweise die aromatischen mehrwertigen Isocyanate in Frage. Die organischen Di- oder Polyisocyanate können gegebenenfalls modifiziert sein.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- oder Polyisocyanate können einzeln oder in Form ihrer Mischungen eingesetzt werden.

Bevorzugte Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch modifizierte mehrwertige Isocyanate, d.h. Produkte, die durch chemische Umsetzung organischer Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Polyisocyanate.

Zur Herstellung der erfindungsgemäßen Polyurethan-Hartschaumstoffe wird ganz besonders bevorzugt Polymer-MDI eingesetzt, z.B. Lupranat® M20 von BASF SE.

Zur Herstellung der erfindungsgemäßen Polyurethan-Hartschaumstoffe werden die gegebenenfalls modifizierten organischen Di- und/oder Polyisocyanate A) und die erfindungsgemäße Polyolkomponente b) mit dem zusätzlich zugesetzten physikalischen Treibmittel H) in solchen Mengen zur Umsetzung gebracht, dass der Isocyanatindex 70 bis 300, bevorzugt 90 bis 200, besonders bevorzugt 100 bis 150 beträgt.

Die Polyurethan-Hartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht. Die Vermischung erfolgt üblicherweise im Hochdruckmischkopf. Die Formwerkzeugtemperatur beträgt zweckmäßigerweise 20 bis 110°C, vorzugsweise 30 bis 70°C und insbesondere 40 bis 60°C.

Ein weiterer Gegenstand der Erfindung sind durch das erfindungsgemäße Verfahren erhaltene PU-Hartschaumstoffe.

Die durch das erfindungsgemäße Verfahren hergestellten Polyurethan-Hartschaumstoffe weisen im Allgemeinen eine frei geschäumte Dichte von 10 bis 100 g/l, vorzugsweise von 15 bis 50 g/l und insbesondere von 20 bis 40 g/l, auf.

Weiterer Gegenstand der Erfindung ist die Verwendung der durch das erfindungsgemäße Verfahren hergestellten Polyurethan-Hartschaumstoffe für Dämm- und Kühlanwendungen.

Die Erfindung wird durch die nachstehenden Beispiele näher erläutert.

### Beispiele

### Messmethoden:

### Messung der Hydroxylzahl:

Die Hydroxylzahlen wurden nach der DIN 53240 (1971-12) bestimmt.

### Viskositätsbestimmung:

Die Viskosität der Plyole wurde, wenn nicht anders angegeben, bei 25°C gemäß DIN EN ISO 3219 (1994) mit einem Rotationsviskosimeter Rheotec RC 20 unter Verwendung der Spindel CC 25 Din (Spindel-Durchmesser: 12,5 mm; Messzylinder-Innendurchmesser: 13,56 mm) bei einer Scherrate von 50 1/s bestimmt.

### Bestimmung der Pentanlöslichkeit:

Zur Beurteilung der Pentanlöslichkeit wird die Polyolkomponente b) mit der in den Beispielen angegebenen Menge an physikalischemTreibmittel H) vermischt (Vollrath-Rührer, 1500 Umdrehungen/Min., 2 Min. Rührzeit) in ein Schraubglas gegeben und verschlossen. Nach vollständigem Entweichen von Gasbläschen wird die Klarheit der Probe zunächst bei Raumtemperatur geprüft. Ist die Probe klar, wird sie anschließend im Wasserbad in Schritten von 1 °C abgekühlt und 30 Min. nach Erreichen der eingestellten Temperatur auf Klarheit geprüft.

### Bestimmung des Entformungsverhaltens:

Die Bestimmung des Entformungsverhaltens erfolgte durch Messung des Nachtriebes von Schaumkörpern, die mit einer Kastenform der Dimension 700 x 400 x 90 mm bei einer Werkzeugtemperatur von 45±2°C in Abhängigkeit der Entformzeit und der Überfüllung (OP = Overpacking, entspricht dem Verhältnis der Gesamtrohdichte/Mindestfülldichte) hergestellt wurden. Der Nachtrieb wurde durch Höhenmessung der Schaumquader nach 24 h ermittelt.

### Mindestfülldichte für ein Bauteil/ Frei geschäumte Dichte:

Für die Bestimmung der Mindestfülldichte wird so viel Polyurethanreaktionsgemisch in eine Form der Maße 2000 x 200 x 50 mm bei einer Werkzeugtemperatur von 45±2°C eingebracht, dass die Form gerade gefüllt ist. Die freigeschäumte Dichte wird durch Aufschäumen des Polyurethanreaktionsgemisches in einen Plastiksack bei Raumtemperatur bestimmt. Die Dichte wird an einem Würfel, der aus der Mitte des ausgeschäumten Plastiksacks entnommen worden ist, bestimmt.

### Bestimmung der Fließfähigkeit:

Die Fließfähigkeit wird als Fließfaktor = (Mindestfülldichte/Frei geschäumte Dichte) angegeben.

### Wärmeleitfähigkeit:

Die Wärmeleitfähigkeit wurde mit einem Taurus TCA300 DTX Gerät bei einer Mitteltemperatur von 10 °C bestimmt. Zur Herstellung der Prüfkörper wurde das Polyurethan-Reaktionsgemisch in eine Form der Maße 2000 x 200 x 50 mm eingebracht (15 % Überfüllung) und nach 5 Min. entformt. Nach Lagerung für 24 Stunden bei Normklima wurden mehrere Schaumquader (Position 10, 900 und 1700 mm bezogen auf Lanzenanfang) der Dimension 200 x 200 x 50 mm aus der Mitte geschnitten. Anschließend wurde die Ober- und Unterseite entfernt, so dass Prüfkörper der Dimension 200 x 200 x 30 mm erhalten wurden.

### Druckfestigkeit:

Die Druckfestigkeit wurde bestimmt nach DIN ISO 844 EN DE (2014-11).

### Beispiele:

### Ausgangsstoffe:

Biodiesel gemäß Norm EN 14214 (2010)

### Herstellung des Polyetherpolyols C

Ein 600 I Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80°C aufgeheizt und mehrmals inertisiert. 120,2 kg vicinales Toluoldiamin wurde in den Reaktor eingefüllt und der Rührer wurde in Betrieb genommen. Anschließend wurde der Reaktor nochmals inertisiert und die Temperatur auf 130°C erhöht und 160,06 kg Propylenoxid wurden zudosiert. Nach einer Abreaktion von 2 h wurden die Temperatur auf 100°C abgesenkt und 4,29 kg Dimethylethanolamin zugegeben. Das Zwischenprodukt wurde mit weiteren 233,97 kg Propylenoxid umgesetzt. Die Nachreaktion lief für 2 Stunden bei 100°C. Es wurden 508,6 kg Produkt mit folgenden Parametern erhalten:

| | |
|---|---|
| OH-Zahl | 399 mg KOH/g |
| Viskosität (bei 25°C) | 17016 mPas |

### Herstellung des Polyetherpolyols D3

In einen wie oben für das Polyetherpolyol C)beschriebenen Reaktor wurden 21,20 kg Glycerin, 136,49 kg Saccharose und 1,03 kg einer wässrigen Imidazollösung (50 Gewichtsprozent in Wasser) gegeben. Der Rührer wurde in Betrieb genommen und der Reaktor wurde mehrmals inertisiert und auf 120°C erwärmt. Anschließend wurden 361,1 kg Propylenoxid in den Reaktor dosiert. Die Nachreaktion von 2 Stunden lief bei 120°C ab. Das noch vorhandene Propylenoxid wurde im Stickstoffstrom abgestrippt. Das Produkt (498,3 kg) wies folgende Parameter auf:

| | |
|---|---|
| OH-Zahl | 432 mg KOH/g |
| Viskosität (bei 25°C) | 26871 mPas. |

### Herstellung des Polyetheresterpolyols B1

53,60 kg Glycerin, 0,47 kg einer wässrigen Imidazollösung (50% Gewichtsprozent), 90,53 kg Saccharose sowie 70,24 kg Biodiesel wurden bei 25 °C in einem wie oben für das Polyetherpolyol C) beschriebenen Reaktor vorgelegt. Anschließend wurde dieser dreimal mit Stickstoff inertisiert. Der Kessel wurde auf 130 °C erhitzt und 305,41 kg Propylenoxid zudosiert. Nach einer Abreaktionszeit von 3 h wurde für 60 Minuten unter vollem Vakuum bei 100 °C evakuiert und anschließend auf 25 °C abgekühlt. Es wurden 502,4 kg Produkt erhalten.

| | |
|---|---|
| OH-Zahl | 415 mg KOH/g |
| Viskosität (bei 25°C) | 3215 mPas |

Säurezahl: 0,01 mg KOH/g

In Analogie zu den vorstehenden Synthesevorschriften wurden die nachstehenden Komponenten zu Polyolen umgesetzt (alle Angaben in Gew.-%):
Polyol B1: Polyetheresterol auf Basis Saccharose 17,4%; Glycerin 10,3%; Propylenoxid (PO) 58,7% und Biodiesel 13,5%, OH-Zahl 415 mg KOH/g;
Polyol B2 (nicht erfindungsgemäß): Polyetheresterol auf Basis Saccharose 12,04%; Glycerin 12,7%; Propylenoxid (PO) 41,2% und Ölsäuremethylester 25,6%, OH-Zahl 489 mg KOH/g;
Polyol C: Polyetherol auf Basis vic-TDA und PO OH-Zahl 399 mg KOH/g;
Polyol X1 (nicht erfindungsgemäß): Polyetherol auf Basis vic-TDA, Ethylenoxid (EO) und PO, OH-Zahl 160 mg KOH/g.
Polyol X2 (nicht erfindungsgemäß): Polyetherol auf Basis Glycerin und PO, OH-Zahl 160 mg KOH/g.
Polyol X3 (nicht erfindungsgemäß): Polyetherol auf Basis Saccharose, OH-Zahl von 340 mg KOH/g analog zu Multranol 9171 von Covestro (als Polyol Z in EP 2 029 711 A1 verwendet).
Polyol X4: Polyetherol auf Basis vic-TDA analog zu Multranol 8120 von Covestro (als Polyol Y in EP 2 029 711 A1 verwendet).
Polyol D1: Polyetherol auf Basis von Saccharose, Glycerin und PO, OH-Zahl von 450 mg KOH/g, Funktionalität: 5,0.
Polyol D2: Polyetherol auf Basis von Saccharose, Glycerin und PO, OH-Zahl von 411 mg KOH/g, Funktionalität: 6,0.
Polyol D3: Polyetherol auf Basis von Saccharose, Glycerin und PO, OH-Zahl von 432 mg KOH/g, Funktionalität: 6,0.
Stabilisator F): silikonhaltiger Schaumstabilisator, Tegostab® B8474 und/oder Tegostab® B8491 von Evonik
Katalysatormischung E) bestehend aus:
   Katalysator E1): Dimethylcyclohexylamin
   Katalysator E2): Pentamethyldiethylentriamin
   Katalysator E3): Tris(dimethylaminopropyl)hexahydro-1,3,5-triazin
   Katalysator E4): Dimethylbenzylamin

Die vorgenannte Katalysatormischung E) wurde in den Beispielen 1 bis 3 und in den Vergleichsbeispielen 1, 2, 4 und 5 eingesetzt (s. Tab. 1). Die Katalysatormischung von Vergleichsbeispiel 3 (gemäß WO 2013/127647, Tab. 2, Bsp.3) enthält nur die Katalysatoren E1), E2) und E3).
Isocyanat: Polymer-MDI mit einem NCO-Gehalt von 31,5 Gew.-% (Lupranat® M20)

Aus den vorgenannten Rohstoffen wurde eine Polyolkomponente (alle Angaben in Gew.-%) hergestellt, der vor dem Verschäumen ein physikalisches Treibmittel zugesetzt wurde. Mittels eines Hochdruck-Puromaten® PU 30/80 IQ (Elastogran GmbH) mit einer Austragsmenge von 250 g/sek wurde die mit dem physikalischen Treibmittel versetzte Polyolkomponente mit der erforderlichen Menge des angegebenen Isocyanats vermischt, so dass ein Isocyanat-Index (wenn nicht anders angegeben) von 117 erreicht wurde. Die Reaktionsmischung wurde in auf 40°C temperierte Formwerkzeuge der Abmessungen 2000 mm x 200 mm x 50 mm bzw. 400 mm x 700 mm x 90 mm eingespritzt und dort aufschäumen gelassen. Die Überfüllung betrug 14,5 %, d.h. es wurden 14,5% mehr Reaktionsmischung eingesetzt, als zum vollständigen Ausschäumen der Form notwendig gewesen wäre.

Tabelle 1 zeigt die Messergebnisse für die jeweilige Zusammensetzung der Polyolkomponente (PK) b) (Angaben in Gew.- %) und die der daraus erhaltenen Schäume. Die Menge des physikalischen Treibmittels (Cyclopentan) ist in Gewichtsteilen angegeben, die 100 Gewichtsteilen der Polyolkomponente zugesetzt werden.

**Tabelle 1**

| | Bsp.1 | Bsp. 2 | Bsp. 3 | Vgl. Bsp. 1 | Vgl. Bsp. 2 | Vgl. Bsp. 3 | Vgl. Bsp. 4 | Vgl. Bsp. 5 |
|---|---|---|---|---|---|---|---|---|
| Polyol B1 | 31,5 | 31,5 | 31,5 | 28,6 | 0 | | 31,5 | 46,0 |
| Polyol B2 | 0 | 0 | 0 | 0 | 0 | 60 | 0 | 0 |
| Polyol D1 | 31,0 | 0 | 0 | 29,0 | 56,0 | 0 | 0 | 0 |
| Polyol C | 30,0 | 30,0 | 30,0 | 30,0 | 23,0 | 30 | 30,0 | 0 |
| Polyol X1 | 0 | 0 | 0 | 5,0 | 0 | 0 | 0 | 0 |
| Polyol D2 | 0 | 31,0 | 0 | 0 | 0 | 0 | 0 | 0 |
| Polyol D3 | 0 | 0 | 31,0 | 0 | 0 | 0 | 0 | 0 |
| Polyol X2 | 0 | 0 | 0 | 0 | 13,5 | 0 | 0 | 0 |
| Polyol X3 | 0 | 0 | 0 | 0 | 0 | 0 | 31,0 | 28 |
| Polyol X4 | 0 | 0 | 0 | 0 | 0 | 0 | 0 | 18,5 |
| Stabilisator | 2,8 | 2,8 | 2,8 | 2,8 | 2,8 | 2,75 | 2,8 | 2,8 |
| H₂O | 2,6 | 2,6 | 2,6 | 2,6 | 2,6 | 2,55 | 2,6 | 2,6 |
| Katalysatormischung | 2,1 | 2,1 | 2,1 | 2,0 | 2,1 | E1) 0,44 E2) 0,71 E3) 0,35 | 2,1 | 2,1 |
| Summe | 100 | 100 | 100 | 100 | 100 | | 100 | 100 |
| Cyclopentan 95 (CP 95) | 13,5 | 13,5 | 13,5 | 13,5 | 13,5 | 13 | 13,5 | 13,5 |
| NCO-Index | 117 | 117 | 117 | 117 | 117 | 118 | 117 | 117 |
| Abbindezeit [s] | 41 | 42 | 40 | 42 | 41 | 37 | 40 | 41 |
| Frei geschäumte Dichte [g/L] | 22,6 | 22,5 | 22,7 | 22,2 | 22,0 | 23,4 | 21,8 | 22,7 |
| PK-Stabilität mit CP 95 bei RT | klar | klar | klar | klar | klar | klar | klar | klar |
| PK-Stabilität mit CP 95 bei 6 °C | klar | klar | klar | klar | klar | klar | klar | klar |
| Nachexpansion [%] 14,5% Überfüllung | | | | | | | | |
| 3 min | 4,0 | 3,6 | 2,8 | 4,2 | 4,0 | 3,11 | 3,6 | 4,3 |
| 4 min | 2,3 | 2,0 | 1,5 | 2,5 | 2,6 | 1,78 | 2,1 | 2,8 |
| Druckfestigkeit [N/mm²] bei Dichte 31 g/L | 0,157 | 0,155 | 0,157 | 0,143 | 0,148 | 0,144 | 0,149 | 0,143 |

| | | | | | | | | |
|---|---|---|---|---|---|---|---|---|
| Vergleichsbeispiel 2 entspricht der EP-A 1 138 709. Vergleichbeispiel 3 entspricht der WO 2013/127647 A1. Vergleichsbeispiele 4 und 5 entsprechen der EP 2 039 711 A1. | | | | | | | | |

Vergleichsbeispiel 1 (Vgl-Bsp 1) zeigt eine nicht erfindungsgemäße Formulierung der Polyolkomponente, die erfindungsgemäß eingesetzte Polyole B1, C und D1 und zusätzlich einen Polyetheralkohol X1 mit einer Funktionalität von 4 und einer Hydroxylzahl von 160 mg KOH/g enthält. Die erhaltenen PU-Hartschaumstoffe besitzen gegenüber denen aus Beispiel 1 eine schlechtere Entformung und auch um -9% schlechtere Druckfestigkeit.

Vergleichsbeispiel 2 zeigt eine für Kühlgeräte übliche Formulierung, enthaltend einen Polyetheralkohol X2 mit einer Funktionalität von 4 und einer Hydroxylzahl von 160 mg KOH/g gemäß EP 1 138 709 A1. Im Vergleich der erhaltenen PU-Hartschaumstoffe wird deutlich, dass die Produkte gemäß Beispiel 1 eine um 6% verbesserte Druckfestigkeit sowie eine verbesserte Entformung bei 4 min aufweisen.

In Vergleichsbeispiel 3 wurde eine Formulierung einer Polyolkomponente gemäß Beispiel 3 aus der WO 2013/127647 A1 eingesetzt, die ein nicht erfindungsgemäßes Polyetheresterol B2 und ein Polyetherol C enthält. Die Druckfestigkeit des erhaltenen PU-Hartschaums ist um 6-8% schlechter als die der Produkte aus den Beispielen 1 bis 3.

In den Formulierungen der Polyolkomponenten der Beispiele 2 und 3 wurden Saccharose/Glycerin basierte Polyetherole D2 bzw. D3 mit höherer Funktionalität eingesetzt. Die erhaltenen PU-Hartschaumstoffe zeichnen sich insbesondere durch eine bessere Entformung aus.

Im Vergleichsbeispiel 4 wurde eine Formulierung einer Polyolkomponente eingesetzt, die neben den erfindungsgemäß eingesetzten Polyolen B) und C), ein nicht erfindungsgemäß eingesetztes Polyol X3 - analog zu Polyol Z (Multranol 9171) aus EP-A 2 039 711 - enthält. Die Druckfestigkeit des erhaltenen PU-Hartschaums ist um 4 bis 5% schlechter als die der Produkte aus den Beispielen 1 bis 3. Im Vergleich zu den Beispielen 2 und 3 ist auch die Entformung des erhaltenen PU-Hartschaums schlechter.

Vergleichsbeispiel 5 zeigt eine Formulierung einer Polyolkomponente, die ein erfindungsgemäß eingesetztes Polyol B1 und die Polyole X3 und X4 - analog zu den Polyolen Z (Multranol 9171) und Y (Multranol 8120) aus EP-A 2 039 711 (vgl. Beispiel 7) - enthält. Die erhaltenen PU-Hartschaumstoffe besitzen gegenüber denen aus den Beispielen 1 bis 3 eine schlechtere Entformung und auch um 8 bis 9% schlechtere Druckfestigkeit.

## Patentansprüche

1. Polyolkomponente b) enthaltend:
25 bis 35 Gew.-% eines oder mehrerer Polyetheresterpolyole B) mit einer Funktionalität von 3,8 bis 4,8, einer OH-Zahl von 380 bis 440 mg KOH/g und einem Fettsäure- und/oder Fettsäureestergehalt von 8 bis 17 Gew.-%, bezogen auf das Gewicht der Polyetheresterpolyole B);
25 bis 35 Gew.-% eines oder mehrerer Polyetherpolyole C) mit einer Funktionalität von 3,7 bis 4 und einer OH-Zahl von 300 bis 420 mg KOH/g;
25 bis 35 Gew.-% eines oder mehrerer Polyetherpolyole D) mit einer Funktionalität von 4,5 bis 6,5 und einer OH-Zahl von 400 bis 520 mg KOH/g;
1,0 bis 5 Gew.-% Gew.-% eines oder mehrerer Katalysatoren E),
0,1 bis 5 Gew.-% weiterer Hilfsmittel und/oder Zusatzstoffe F),
0,5 bis 5 Gew.-% Wasser G),
wobei die Summe der Komponenten B), C), D), E), F) und G) 100 Gew.-% ergibt.

2. Polyolkomponente gemäß Anspruch 1, **dadurch gekennzeichnet dass**,
das Polyetheresterpolyol B) eine mittlere Funktionalität von 4,0 bis 4,7, eine OH-Zahl von 390 bis 430 und einen Fettsäure- und/oder Fettsäureestergehalt, bevorzugt Fettsäuremethylestergehalt, von 10 bis 16 Gew.-%;
das Polyetherpolyol C) eine mittlere Funktionalität von 3,9 bis 4,1 und eine OH-Zahl von 350 bis 410 mg KOH/g; und das Polyetherpolyol D) eine mittlere Funktionalität von 4,8 bis 6,2 und eine OH-Zahl von 400 bis 480 mg KOH/g aufweist.

3. Polyolkomponente gemäß Anspruch 1 oder 2, **dadurch gekennzeichnet dass**,
das Polyetheresterpolyol B) eine mittlere Funktionalität von 4,0 bis 4,7, eine OH-Zahl von 410 bis 430 und einen Fettsäure- und/oder Fettsäureestergehalt, bevorzugt Fettsäuremethylestergehalt, von 11 bis 15 Gew.-% aufweist.

4. Polyolkomponente gemäß einem der Ansprüche 1 bis 3, **dadurch gekennzeichnet, dass** das Polyetherpolyol C) ein alkoxyliertes Toluylendiamin ist und das Polyetherpolyol D) ein alkoxyliertes Saccharose/Glycerin-Gemisch ist.

5. Polyolkomponente nach einem der Ansprüche 1 bis 4, **dadurch gekennzeichnet, dass** als Polyetheresterpolyol B) das Umsetzungsprodukt von einem Saccharose/Glycerin-Starter-Gemisch mit Biodiesel oder Ölsäuremethylester und einem oder mehreren Alkylenoxiden mit 2 bis 4 C-Atomen eingesetzt wird.

6. Polyolkomponente nach einem der Ansprüche 1 bis 5 enthaltend:
27 bis 32 Gew.-% der Polyetheresterpolyole B),
27 bis 32 Gew.-% der Polyetherpoylole C),
27 bis 32 Gew.-% der Polyetherpolyole D),
1 bis 3 Gew.-% Katalysatoren E),
1 bis 3 Gew.-% Hilfsmittel und/oder Zusatzstoffe F), sowie
1,5 bis 3 Gew.-%, vorzugsweise 2,0 bis 3,0 Gew.-%, Wasser G),
wobei die Summe der Komponenten B) bis G) 100 Gew.-% ergibt.

7. Verfahren zur Herstellung von Polyurethan-Hartschaumstoffen durch Umsetzung von
I) organischen oder modifizierten organischen Di- oder Polyisocyanaten A) oder Gemischen daraus, mit
II) einer Polyolkomponente b) gemäß einem der Ansprüche 1 bis 6, der zuvor ein Treibmittel H) zugesetzt wurde.

8. Polyurethan-Hartschaumstoff erhältlich durch das Verfahren gemäß Anspruch 7.

9. Verwendung der Polyolkomponente gemäß einem der Ansprüche 1 bis 6 zur Herstellung von Polyurethan-Hartschaumstoffen.

10. Verwendung des durch das Verfahren gemäß Anspruch 7 hergestellten Polyurethan-Hartschaumstoffs für Dämm- und Kühlanwendungen.

## Claims

1. A polyol component b) comprising:
25 to 35 wt% of one or more polyetherester polyols B) having a functionality of 3.8 to 4.8, an OH number of 380 to 440 mg KOH/g and a fatty acid and/or fatty acid ester content of 8 to 17 wt%, based on the weight of polyetherester polyols B);
25 to 35 wt% of one or more polyether polyols C) having a functionality of 3.7 to 4 and an OH number of 300 to 420 mg KOH/g;
25 to 35 wt% of one or more polyether polyols D) having a functionality of 4.5 to 6.5 and an OH number of 400 to 520 mg KOH/g;
1.0 to 5 wt% of one or more catalysts E),
0.1 to 5 wt% of further auxiliaries and/or added-substance materials F),
0.5 to 5 wt% of water G),
wherein the sum total of components B), C), D), E), F) and G) is 100 wt%.

2. The polyol component according to claim 1 wherein said polyetherester polyol B) has a mean functionality of 4.0 to 4.7, an OH number of 390 to 430 and a fatty acid and/or fatty acid ester content, preferably fatty acid methyl ester content, of 10 to 16 wt%;
said polyether polyol C) has a mean functionality of 3.9 to 4.1 and an OH number of 350 to 410 mg KOH/g;
and said polyether polyol D) has a mean functionality of 4.8 to 6.2 and an OH number of 400 to 480 mg KOH/g.

3. The polyol component according to claim 1 or 2 wherein said polyetherester polyol B) has a mean functionality of 4.0 to 4.7, an OH number of 410 to 430 and a fatty acid and/or fatty acid ester content, preferably fatty acid methyl ester content, of 11 to 15 wt%.

4. The polyol component according to any of claims 1 to 3 wherein said polyether polyol C) is an alkoxylated toluylenediamine and said polyether polyol D) is an alkoxylated sucrose-glycerol mixture.

5. The polyol component according to any of claims 1 to 4 wherein said polyetherester polyol B) comprises the reaction product of a sucrose-glycerol starter mixture with biodiesel or oleic acid methyl ester and one or more alkylene oxides having 2 to 4 carbon atoms.

6. The polyol component according to any of claims 1 to 5 comprising:
27 to 32 wt% of polyetherester polyols B),
27 to 32 wt% of polyether polyols C),
27 to 32 wt% of polyether polyols D),
1 to 3 wt% of catalysts E),
1 to 3 wt% of auxiliaries and/or added-substance materials F), and also
1.5 to 3 wt%, preferably 2.0 to 3.0 wt%, of water G), wherein the sum total of components B) to G) is 100 wt%.

7. A process for preparing rigid polyurethane foams by reaction of
I) organic or modified organic di- or polyisocyanates A) or mixtures thereof, with
II) a polyol component b) according to any of claims 1 to 6 after addition thereto of a blowing agent H).

8. A rigid polyurethane foam obtainable by the process according to claim 7.

9. The method of using the polyol component according to any of claims 1 to 6 in the manufacture of rigid polyurethane foams.

10. The method of using the rigid polyurethane foam obtained by the process according to claim 7 for insulation and refrigeration applications.

## Revendications

1. Composant de polyol b) contenant :
25 à 35 % en poids d'un ou plusieurs polyétheresterpolyols B) dotés d'une fonctionnalité de 3,8 à 4,8, d'un indice d'OH de 380 à 440 mg de KOH/g et d'une teneur en acide gras et/ou en ester d'acide gras de 8 à 17 % en poids, par rapport au poids des polyétheresterpolyols B) ;
25 à 35 % en poids d'un ou plusieurs polyétherpolyols C) dotés d'une fonctionnalité de 3,7 à 4 et d'un indice d'OH de 300 à 420 mg de KOH/g ;
25 à 35 % en poids d'un ou plusieurs polyétherpolyols D) dotés d'une fonctionnalité de 4,5 à 6,5 et d'un indice d'OH de 400 à 520 mg de KOH/g ;
1,0 à 5 % en poids d'un ou plusieurs catalyseurs E),
0,1 à 5 % en poids d'autres auxiliaires et/ou additifs F),
0,5 à 5 % en poids d'eau G),
la somme des composants B), C), D), E), F) et G) donnant 100 % en poids.

2. Composant de polyol selon la revendication 1, **caractérisé en ce que** le polyétheresterpolyol B) présente une fonctionnalité moyenne de 4,0 à 4,7, un indice d'OH de 390 à 430 et une teneur en acide gras et/ou en ester d'acide gras, préférablement une teneur en ester méthylique d'acide gras, de 10 à 16 % en poids ;
le polyétherpolyol C) présente une fonctionnalité moyenne de 3,9 à 4,1 et un indice d'OH de 350 à 410 mg de KOH/g ; et le polyétherpolyol D) présente une fonctionnalité moyenne de 4,8 à 6,2 et un indice d'OH de 400 à 480 mg de KOH/g.

3. Composant de polyol selon la revendication 1 ou 2, **caractérisé en ce que** le polyétheresterpolyol B) présente une fonctionnalité moyenne de 4,0 à 4,7, un indice d'OH de 410 à 430 et une teneur en acide gras et/ou en ester d'acide gras, préférablement une teneur en ester méthylique d'acide gras, de 11 à 15 % en poids.

4. Composant de polyol selon l'une quelconque des revendications 1 à 3, **caractérisé en ce que** le polyétherpolyol C) est une toluylènediamine alcoxylée et le polyétherpolyol D) est un mélange saccharose/glycérine alcoxylé.

5. Composant de polyol selon l'une quelconque des revendications 1 à 4, **caractérisé en ce qu'**en tant que polyétheresterpolyol B), le produit de transformation d'un mélange de départ saccharose/glycérine avec du biodiesel ou de l'ester méthylique de l'acide oléique et un ou plusieurs oxydes d'alkylène comportant 2 à 4 atomes de C, est utilisé.

6. Composant de polyol selon l'une quelconque des revendications 1 à 5 contenant :
27 à 32 % en poids des polyétheresterpolyols B),
27 à 32 % en poids des polyétherpolyols C),
27 à 32 % en poids des polyétherpolyols D),
1 à 3 % en poids des catalyseurs E),
1 à 3 % en poids des auxiliaires et/ou additifs F), ainsi que
1,5 à 3 % en poids, de préférence 2,0 à 3,0 % en poids, d'eau G),
la somme des composants B) à G) donnant 100 % en poids.

7. Procédé pour la préparation de mousses dures de polyuréthane par transformation
I) de diisocyanates ou de polyisocyanates A) organiques ou organiques modifiés ou de mélanges de ceux-ci, avec
II) un composant de polyol b) selon l'une quelconque des revendications 1 à 6, auquel un agent propulseur H) a été précédemment ajouté.

8. Mousse dure de polyuréthane pouvant être obtenue par le procédé selon la revendication 7.

9. Utilisation du composant de polyol selon l'une quelconque des revendications 1 à 6 pour la préparation de mousses dures de polyuréthane.

10. Utilisation de la mousse dure de polyuréthane préparée par le procédé selon la revendication 7 pour des applications d'isolation et des applications de réfrigération.
